# EUROPÄISCHE PATENTSCHRIFT

(11) **EP 1 193 291 B1**
(45) Veröffentlichungstag und Bekanntmachung des Hinweises auf die Patenterteilung: **17.03.2004**
(21) Anmeldenummer: 01121778.3
(22) Anmeldetag: 20.09.2001
(51) Int. Cl.: C08L 23/08

(54) **Thermoplastische Formmassen**
Thermoplastic molding materials
Matieres de moulage thermoplastiques

(30) Priorität: 29.09.2000 DE 10048738
(43) Veröffentlichungstag der Anmeldung: 03.04.2002
(73) Patentinhaber: Lucobit AG, 50389 Wesseling (DE)
(72) Erfinder: Deloux, Laurent, Dr., 69115 Heidelberg (DE); Riegler, Robert, 67459 Böhl-Iggelheim (DE); Rau, Lothar, 67067 Ludwigshafen (DE)
(74) Vertreter: Hoffmann, Peter

(56) Entgegenhaltungen:
- EP-A- 0 816 426
- US-A- 3 980 598
- "Hawley's Condensed Chemical Dictionary" 1987 , VAN NOSTRAND REINHOLD CO. , NEW YORK XP002187159 * Seite 102 * * Seite 155 *

## Beschreibung

Die vorliegende Erfindung betrifft thermoplastische Formmassen enthaltend thermoplastisches Polymer, Bitumen, ein oder mehrere Pigmente und ggf. weitere Zusätze.

Weiterhin betrifft die Erfindung ein Verfahren zur Herstellung von thermoplastischen Formmassen, welche neben geringen Mengen von Bitumen auch ein oder mehrere Pigmente enthalten, die Verwendung von thermoplastischen Formmassen zur Herstellung von Dach- und Dichtungsbahnen sowie die Verwendung von Bitumen in geringer Konzentration zur Einfärbung von Dach- und Dichtungsbahnen.

Dach- und Dichtungsbahnen aus thermoplastischen Polymeren gemischt mit Bitumen haben weite Verbreitung gefunden. Durch den hohen Bitumenanteil sind diese Dachund Dichtungsbahnen in der Regel dunkelbraun bis schwarz gefärbt. In jüngerer Zeit wurden verschiedene Versuche unternommen, derartige Dach- und Dichtungsbahnen mit farbgebenden Pigmenten zu versetzen, um auf diese Weise den Einsatzbereich solcher Dach- und Dichtungsbahnen durch die Möglichkeit verschiedener farblicher Varianten zu erweitern.

Aus der europäischen Patentanmeldung EP-A-0 816 426 ist ein Verfahren zur Herstellung gefärbter thermoplastischer Formmassen bekannt, nach welchem zunächst ein thermoplastisches Polymer mit Pigmenten vermischt und anschließend diese Mischung mit Bitumen versetzt wird. Die bitumenhaltigen thermoplastischen Formmassen dieser Patentanmeldung enthalten zwischen 5 und 70 Gew.-% Bitumen und sind daher auch im niedrigen Bitumenanteilsbereich relativ dunkel gefärbt. Durch die sequenzielle Mischung des thermoplastischen Polymers zunächst mit den Pigmenten und anschließend mit dem Bitumen ist es dennoch möglich, Formmassen von akzeptabler Farbbrillanz zu erhalten. Der Bitumenanteil dieser Formmassen ist jedoch so hoch, dass das Bitumen einen erheblichen Einfluss auf die Materialeigenschaften der Formmassen und damit der Dach- und Dichtungsbahn hat.

Aufgabe der vorliegenden Erfindung war es, bitumenhaltige thermoplastische Formmassen bereitzustellen, die durch ihre besondere Farbigkeit den Einsatzbereich von Dach- und Dichtungsbahnen noch erweitern können.

Gelöst wird diese Aufgabe durch bitumenhaltige, thermoplastische Formmassen enthaltend:
a) 60 bis 99,9 Gew.-% eines thermoplastischen Polymers;
b) mindestens 0, 2, jedoch weniger als 4,0 Gew.-% Bitumen;
c) 1 bis 25 Gew.-% eines oder mehrerer Pigmente und
d) optional bis zu 25 Gew.-% weiterer Zusätze, jeweils bezogen auf die Gesamtmasse der Formmassen.

Die erfindungsgemäßen thermoplastischen Formmassen enthalten im Gegensatz zu den aus dem Stand der Technik bekannten Formmassen weniger als 5 Gew.-% Bitumen. Durch diesen geringen Bitumenanteil erhalten die erfindungsgemäßen thermoplastischen Formmassen ein neuartiges ungewöhnliches "pastellfarbenes" Erscheinungsbild. Der damit verbundene ästhetische Effekt ermöglicht einen breiteren Einsatz solcher thermoplastischer Formmassen als Dach- und Dichtungsbahnen auch an solchen Gebäudeteilen, die für den Betrachter deutlich sichtbar sind.

Als Bitumen können alle handelsüblichen Normenbitumen nach DIN 1995 eingesetzt werden, z.B. Mexphalt® B 80 von der Firma Shell.

Als thermoplastische Polymere können verschiedene Polymere eingesetzt werden, z.B. Polymerisate und Copolymerisate des Ethylens, des Propylens, des 1-Butens, des Isobutylens und des Vinylchlorids.

Nach einer besonders vorteilhaften Ausführungsform der vorliegenden Erfindung sind die thermoplastischen Formmassen dadurch gekennzeichnet, dass als thermoplastisches Polymer ein Ethylencopolymer mit einem Ethylenanteil von 80 bis 97 Gew.-%, bezogen auf die Gesamtmasse des thermoplastischen Polymers, enthalten ist. Besonders bevorzugt beträgt der Ethylenanteil solcher Copolymerisate 80 bis 90 Gew.-%.

Als Comonomere kommen verschiedene olefinisch ungesättigte Monomere, z.B. Alk-1-ene, wie Buten, Penten, Hexen und Octen oder Acrylsäure und Methacrylsäure und deren Derivate, beispielsweise Ester wie Ethylacrylat, Propylacrylat, N-Butylacrylat oder Octylacrylat in Betracht. Auch Ethylencopolymere mit Vinylestern, z.B. Vinylacetat, können vorteilhaft eingesetzt werden.

Nach einer weiteren vorteilhaften Ausführungsform der vorliegenden Erfindung sind die thermoplastischen Formmassen dadurch gekennzeichnet, dass als thermoplastisches Polymer ein Copolymer, welches Ethylen und/oder Propylen sowie ein polares Comonomer umfasst, enthalten ist.

Besonders bevorzugt sind thermoplastische Formmassen, welche dadurch gekennzeichnet sind, dass als thermoplastisches Polymer ein Ethylenalkylacrylatcopolymer, insbesondere n-Butylacrylat, enthalten ist.

Der pastellfarbene Eindruck der erfindungsgemäßen thermoplastischen Formmassen ist dann besonders prägnant, wenn der Anteil der Komponente b), also des Bitumens, im Bereich von 0,3 bls 2,0 Gew.-% liegt.

Die erfindungsgemäßen thermoplastischen Formmassen mit geringem Bitumenanteil enthalt zwischen 1 und 25 Gew.-% eines oder mehrerer Pigmente enthalten. Durch die Abmischung mit solchen Pigmenten lassen sich die verschiedensten Farbvarianten herstellen, wobei stets der gewünschte pastellfarbene Effekt auftritt.

Dazu wird der Bitumenanteil so gewählt, dass die gewünschte Helligkeit erzielt wird. Der Pigmentanteil der Formmassen beträgt 1 bis 25 Gew.-%, besonders bevorzugt 5 bis 20 Gew.-%, bezogen auf die Gesamtmasse der Formmassen.

Als Pigmente können verschiedene Weiß- oder Farbpigmente eingesetzt werden. Vorteilhaft ist der Einsatz eines anorganischen Weißpigments. Durch das Weißpigment wird das thermoplastische Polymer optisch undurchlässig und zugleich aufgehellt. Als bevorzugtes Weißpigment kommt insbesondere Titandioxid in Betracht.

Die ausschließliche Verwendung eines Weißpigments führt zu einer braunen, thermoplastischen, bitumenhaltigen Formmasse. Der geringe Bitumenanteil wirkt dabei auf wünschenswerte Weise farbgebend, so dass auch ohne den Zusatz farbiger Pigmente ein positiver Effekt erzielt wird. Vorteilhaft ist aber auch der Einsatz eines farbigen Pigments, besonders in Kombination mit einem Weißpigment. In diesem Fall beträgt der Anteil des Farbpigments neben dem Weißpigment im allgemeinen 1 bis 15 Gew.-%, vorzugsweise 2 bis 12 Gew.-%, besonders bevorzugt 3 bis 10 Gew.-%, bezogen auf die Gesamtmasse der thermoplastischen Formmasse.

Als Farbpigmente kommen alle üblichen anorganischen und organischen Farbpigmente in Betracht. Als anorganische Pigmente sind besonders Chromoxide zu nennen, da zur Herstellung von Dachbahnen besonders gerne grüne thermoplastische Formmassen zum Einsatz kommen.

Geeignete organische Pigmente sind beispielsweise solche aus der Klasse der Monoazopigmente (z.B. Produkte die sich von Acetessigarylidderivaten oder von beta-Naphtholderivaten ableiten), Monoazofarbstoffe und deren Metallsalze wie beta-Oxinaphtholsäurefarbstoffe, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente oder basische Farbstoffe wie Triarylmethanfarbstoffe und deren Salze.

Vorteilhaft ist weiterhin der Einsatz handelsüblicher Pigmentpräparationen wie sie zur Kunststoffeinfärbung verwendet werden. Besonders rote und grüne Pigmentpräparationen sind zur Einfärbung geeignet, beispielsweise die Pigmentzubereitungen Euthylen® (Hersteller: BASF, Ludwigshafen).

Die erfindungsgemäßen thermoplastischen Formmassen können auch noch weitere Zusätze enthalten. Dafür kommen vor allem Zusätze in Betracht, wie sie in den bekannten bituminösen Polymerdichtungsmassen, insbesondere in solchen, die zur Herstellung von Dichtungsbahnen verwendet werden, üblich sind. Solche Zusätze sind z.B. Stabilisatoren gegen Licht- und Witterungseinflüsse wie Derivate des 2,4-Dihydroxybenzophenons, Derivate des 2-Cyan-3,3-diphenylacrylates, Derivate des 2,2,4,4-Tetrahydroxybenzophenons, Derivate des Orthohydroxyphenylbenztriazols, Salicylsäureester, Orthohydroxyphenyl-s-triazine oder spezielle sterisch gehinderte Amine.

Ein weiterer Gegenstand der vorliegenden Erfindung ist ein Verfahren zur Herstellung von bitumenhaltigen, thermoplastischen Formmassen mit einem Pigmentanteil von 1 bis 25 Gew.-% und mindestens 0,2 jedoch weniger als 4,0 Gew.-% Bitumen, welches dadurch gekennzeichnet ist, dass man zuerst eine Mischung enthaltend das thermoplastische Polymer und ein oder mehrere Pigmente herstellt und dass man erst anschliessend daran diese Mischung mit dem Bitumen vermischt.

Das erfindungsgemäße Herstellverfahren wird so durchgeführt, dass zunächst eine innige Mischung enthaltend das thermoplastische Polymer und die Pigmente hergestellt wird. Dies kann durch verschiedene Mischungsverfahren geschehen. Vorteilhaft ist die Mischung in einem Kneter oder Extruder. Um eine ausreichend homogene Mischung zu erreichen, muss im allgemeinen bei erhöhter Temperatur gemischt werden, z.B. in einem Bereich von 50 bis 250 °C, vorzugsweise von 100 bis 220 °C, besonders bevorzugt von 150 bis 190 °C. Es ist weiterhin vorteilhaft, bereits bei diesem Mischungsprozess gewünschtenfalls weitere Zusätze d) zuzugeben.

In einem nachgeschalteten, zweiten Schritt wird anschließend das Bitumen zugegeben. Das Bitumen kann möglichst in kleineren Portionen direkt in das Mischgefäß, wie z.B. einem Kneter, zugegeben werden. Als besonders vorteilhaft hat sich jedoch eine feinstrahlige Zugabe in den Austrag eines Extruders erwiesen. Auf diese Weise kann das Bitumen kontinuierlich zugegeben werden und es wird eine besonders feinteilige und gleichmäßige Verteilung des Bitumens in der Polymermasse erreicht.

Die erfindungsgemäßen thermoplastischen Formmassen eignen sich besonders zur Verwendung bei der Herstellung von Dach- und Dichtungsbahnen. Der niedrige Bitumenanteil der Formmassen ermöglicht dabei eine breite Varianz der Farbgestaltung, wobei in der Regel ein erwünschter pastellfarbener Farbeffekt erzielt wird. Zusätzlich zu diesem farbgebenden Effekt werden durch den Bitumenanteil jedoch auch andere der üblichen vorteilhaften Materialeigenschaften bitumenhaltiger, thermoplastischer Formmassen erzielt, welche besonders bei der Anwendung in Dach- und Dichtungsbahnen von Vorteil sind. So hat der Bitumenanteil einen vorteilhaften Effekt beispielsweise auf die Verarbeitbarkeit der Formmassen aber auch auf ihre Licht- und Witterungsbeständigkeit. Dabei lassen sich die erfindungsgemäßen thermoplastischen Formmassen mit üblichen Maschinen zu Dach- und Dichtungsbahnen verarbeiten, ohne dass besondere apparative Anpassungen erforderlich werden. Wegen des niedrigen Preises von Bitumen ist auch aus wirtschaftlichen Gründen ein Zusatz von Bitumen vorteilhaft.

Ein ganz besonders vorteilhafter Aspekt der vorliegenden Erfindung ist somit die Verwendung von Bitumen in einer Konzentration von mindestens 0,2, jedoch weniger als 4,0 Gew.-%, bezogen auf die Gesamtmasse der Dach- oder Dichtungsbahn, zur Einfärbung von Dach- und Dichtungsbahnen.

Solche Dach- oder Dichtungsbahnen lassen sich hervorragend für Dach- und Gebäudeabdichtungen einsetzen. Die Verarbeitungsweise der Formmassen kann dabei der üblichen Verarbeitungsweise entsprechen, nach denen beispielsweise ECB-Bahnen nach DIN 16729 hergestellt werden.

### Ausführungsbeispiel:

In einem Brabenderkneter wurden 83 Gew.-Teile eines n-Butylethylencopolymeren mit einem Ethylenanteil von 82 Gew.-% (Lucalen® 2700 H, Basell, Ludwigshafen) 10 Gew.-Teile Titandioxid und 5 Gew.-Teile der grünen Farbpigmentzubereitung Euthylen®-Grün (Hersteller BASF AG, Ludwigshafen) über eine Zeitdauer von 10 min bei einer Temperatur von 170°C geknetet. Anschließend daran wurden der Mischung 3 Gew.-Teile Bitumen (Mexphalt® B 80, Firma Shell AG) portionsweise hinzugefügt und über eine Zeitdauer von weiteren 5 min bei der gleichen Temperatur geknetet.

Die so erhaltene thermoplastische Formmasse wies eine leuchtend grüne Farbe mit einem pastellfarbenen Erscheinungsbild auf.

## Patentansprüche

1. Thermoplastische Formmasse enthaltend:
a) 60 bis 99,9 Gew.-% eines thermoplastischen Polymers;
b) mindestens 0,2, jedoch weniger als 4,0 Gew.-% Bitumen;
c) 1 bis 25 Gew.-% eines oder mehrerer Pigmente und
d) optional bis zu 25 Gew.-% weiterer Zusätze, jeweils bezogen auf die Gesamtmasse der Formmasse.

2. Thermoplastische Formmasse nach Anspruch 1, **dadurch gekennzeichnet, dass** der Anteil der Komponente b) vorzugsweise im Bereich von 0,3 bis 2,0 Gew.-% liegt

3. Thermoplastische Formmasse Anspruch 1 oder 2, **dadurch gekennzeichnet, dass** sie als thermoplastisches Polymer ein Ethylencopolymer mit einem Ethylenanteil von 80 bis 97 Gew.-%, bezogen auf die Gesamtmasse des thermoplastischen Polymers, enthält.

4. Thermoplastische Formmasse nach einem oder mehreren der Ansprüche 1 bis 3, **dadurch gekennzeichnet, dass** sie als thermoplastisches Polymer ein Copolymer, das Ethylen und/oder Propylen sowie ein polares Comonomer umfasst, enthält.

5. Thermoplastische Formmasse nach einem oder mehreren der Ansprüche 1 bis 4, **dadurch gekennzeichnet, dass** sie als thermoplastisches Polymer ein Ethylen-Alkylacrylat-Copolymer enthält.

6. Thermoplastische Formmasse nach einem oder mehreren der Ansprüche 1 bis 5, **dadurch gekennzeichnet, dass** sie 2 bis 15 Gew.-% eines oder mehrerer Pigmente enthält.

7. Verfahren zur Herstellung von thermoplastischen Formmassen nach einem oder mehreren der Ansprüche 1 bis 6, **dadurch gekennzeichnet, dass** man zuerst eine Mischung enthaltend das thermoplastische Polymer und ein oder mehrere Pigmente herstellt und dass man erst anschließend daran diese Mischung mit dem Bitumen vermischt.

8. Verfahren nach Anspruch 7, **dadurch gekennzeichnet, dass** man das Vermischen bei erhöhter Temperatur in einem Bereich von 50 bis 250 °C durchführt, vorzugsweise von 100 bis 220 °C, besonders bevorzugt von 150 bis 190 °C.

9. Verwendung von thermoplastischen Formmassen gemäß einem oder mehreren der Ansprüche 1 bis 6 zur Herstellung von Dach- und Dichtungsbahnen.

10. Verwendung von Bitumen in einer Menge von mindestens 0,1, jedoch weniger als 5,0 Gew.-%, bezogen auf die Gesamtmasse der Dach- oder Dichtungsbahn, zur Einfärbung von Dach- und Dichtungsbahnen.

## Claims

1. A thermoplastic molding composition comprising
a) from 60 to 99.9% by weight of a thermoplastic polymer,
b) at least 0.2% by weight, but less than 4.0% by weight, of bitumen,
c) from 1 to 25% by weight of one or more pigments, and
d) if desired, up to 25% by weight of other additives,
based in each case on the total weight of the molding composition.

2. A thermoplastic molding composition as claimed in claim 1, wherein the proportion of component b) is preferably from 0.3 to 2.0% by weight.

3. A thermoplastic molding composition as claimed in claim 1 or 2, wherein the thermoplastic polymer present comprises an ethylene copolymer with an ethylene content of from 80 to 97% by weight, based on the total weight of the thermoplastic polymer.

4. A thermoplastic molding composition as claimed in one or more of claims 1 to 3, wherein the thermoplastic polymer present comprises a copolymer which contains ethylene and/or propylene, and also contains a polar comonomer.

5. A thermoplastic molding composition as claimed in one or more of claims 1 to 4, wherein the thermoplastic polymer present comprises an ethylene-alkyl acrylate copolymer.

6. A thermoplastic molding composition as claimed in one or more of claims 1 to 5, which comprises from 2 to 15% by weight of one or more pigments.

7. A process for preparing thermoplastic molding compositions as claimed in one or more of claims 1 to 6, which comprises first preparing a mixture comprising the thermoplastic polymer and one or more pigments, and only then mixing this mixture with the bitumen.

8. The process as claimed in claim 7, wherein the mixing is carried out at an elevated temperature of from 50 to 250°C, preferably from 100 to 220°C, particularly preferably from 150 to 190°C.

9. The use of thermoplastic molding compositions as claimed in one or more of claims 1 to 6 for producing prepared roofings or sealing sheets.

10. The use of bitumen at a concentration of at least 0.1% by weight, but less than 5.0% by weight, based on the total weight of the prepared roofing or sealing sheet, for coloring prepared roofings or sealing sheets.

## Revendications

1. Mélange à mouler thermoplastique, contenant
a) 60 à 99,9 % en poids d'un polymère thermoplastique ;
b) au moins 0,2, mais moins de 4,0 % en poids de bitume ;
c) 1 à 25 % en poids d'un ou plusieurs pigments, et
d) éventuellement jusqu'à 25 % en poids d'autres additifs,
tous les pourcentages étant rapportés au poids total du mélange à mouler.

2. Mélange à mouler thermoplastique selon la revendication 1, **caractérisé en ce que** la proportion du composant b) est de préférence comprise dans la plage de 0,3 à 2,0 % en poids.

3. Mélange à mouler thermoplastique selon la revendication 1 ou 2, **caractérisé en ce qu'**il contient en tant que polymère thermoplastique un copolymère de l'éthylène contenant de 80 à 97 % en poids d'éthylène par rapport au poids total du polymère thermoplastique.

4. Mélange à mouler thermoplastique selon l'une ou plusieurs des revendications 1 à 3, **caractérisé en ce qu'**il contient en tant que polymère thermoplastique un copolymère qui comprend de l'éthylène et/ou du propylène, ainsi qu'un comonomère polaire.

5. Mélange à mouler thermoplastique selon l'une ou plusieurs des revendications 1 à 4, **caractérisé en ce qu'**il contient en tant que polymère thermoplastique un copolymère éthylène-acrylate d'alkyle.

6. Mélange à mouler thermoplastique selon l'une ou plusieurs des revendications 1 à 5, **caractérisé en ce qu'**il contient 2 à 15 % en poids d'un ou plusieurs pigments.

7. Procédé de fabrication de mélanges à mouler thermoplastiques selon l'une ou plusieurs des revendications 1 à 6, **caractérisé en ce qu'**on prépare d'abord un mélange contenant le polymère thermoplastique et un ou plusieurs pigments, puis ce n'est qu'ensuite que l'on mélange ce mélange au bitume.

8. Procédé selon la revendication 7, **caractérisé en ce qu'**on procède à l'opération de mélange à une température élevée comprise dans la plage de 50 à 250°C, de préférence de 100 à 220°C et d'une manière particulièrement préférée de 150 à 190°C.

9. Utilisation de mélanges à mouler thermoplastiques selon l'une ou plusieurs des revendications 1 à 6 pour fabriquer des bandes de toit et d'étanchéité.

10. Utilisation de bitume en une quantité d'au moins 0,1, mais inférieure à 5,0 % en poids par rapport au poids total de la bande de toit ou d'étanchéité, pour colorer dans la masse des bandes de toit et d'étanchéité.
